(19) Europäisches Patentamt
European Patent Office
Office européen des brevets

(11) **EP 3 786 626 B1**

(12) **FASCICULE DE BREVET EUROPEEN**

(45) Date de publication et mention
de la délivrance du brevet:
**22.06.2022 Bulletin 2022/25**

(21) Numéro de dépôt: **20193412.2**

(22) Date de dépôt: **28.08.2020**

(51) Classification Internationale des Brevets (IPC):
***G01N 23/2252*** [(2018.01)]

(52) Classification Coopérative des Brevets (CPC):
**G01N 23/2252;** G01N 2223/071; G01N 2223/079;
G01N 2223/345; G01N 2223/418; G01N 2223/419

(54) **PROCÉDÉ DE TRAITEMENT DE DONNÉES D'ANALYSE AUX RAYONS X À DISPERSION D'ÉNERGIE GÉNÉRÉES PAR MICROSCOPIE ÉLECTRONIQUE**

VERFAHREN ZUR VERARBEITUNG ENERGIEDISPERSIVER RÖNTGENANALYSEDATEN EINES ELEKTRONENMIKROSKOPES

METHOD FOR PROCESSING ENERGY-DISPERSIVE X-RAY ANALYSIS DATA GENERATED BY ELECTRON MICROSCOPY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.08.2019 FR 1909593**

(43) Date de publication de la demande:
**03.03.2021 Bulletin 2021/09**

(73) Titulaire: **Commissariat à l'Energie Atomique et aux Energies Alternatives
75015 Paris (FR)**

(72) Inventeurs:
• **SOREL, Julien
38054 Grenoble (FR)**
• **SAGHI, Zineb
38054 Grenoble (FR)**

(74) Mandataire: **Hautier IP
20, rue de la Liberté
06000 Nice (FR)**

(56) Documents cités:
• Pavel Potapov ET AL: "Optimal principal component analysis of STEM XEDS spectrum images", Advanced Structural and Chemical Imaging, vol. 5, no. 1, 9 avril 2019 (2019-04-09), XP055718198, DOI: 10.1186/s40679-019-0066-0
• MASASHI WATANABE ET AL: "Analysis of Spectrum-Imaging Datasets in Atomic-Resolution Electron Microscopy", MICROSCOPY AND ANALYSIS, vol. 23, no. 7, novembre 2009 (2009-11), XP055718244,

## Description

### DOMAINE TECHNIQUE

La présente invention concerne le domaine de la caractérisation physico-chimique. Elle trouve pour application particulièrement avantageuse le traitement d'images tomographiques hyperspectrales obtenues par microscopie électronique en transmission.

### ETAT DE LA TECHNIQUE

La tomographie électronique en transmission vise à reconstruire une image 3D de l'objet imagé, à partir d'une série d'images 2D également dénommées projections de cet objet.

Celle-ci peut être couplée à une analyse dispersive en énergie de photo-électrons X, appelée X-EDS ou EDX. Une telle analyse EDX se fait typiquement en chaque point d'une image 2D. En pratique, le faisceau électronique est focalisé de façon quasi-ponctuelle et balaye la zone à imager. Ce mode d'imagerie relève de la microscopie électronique à balayage en transmission STEM (Scanning Transmission Electron Microscopy). Il permet d'obtenir des images 2D sous forme de cartographies dans lesquelles chaque pixel correspond à une position du faisceau électronique focalisé.

Lorsque le faisceau électronique interagit avec la matière de l'objet à imager, un rayonnement de photons X est généré. En détectant et en analysant ce rayonnement X, un spectre de photons X peut ainsi être obtenu en chaque pixel d'une cartographie 2D.

En couplant la tomographie électronique à une analyse STEM EDX, il est possible de reconstruire le volume 3D de l'objet imagé en associant à chaque pixel 3D (également appelé voxel), un spectre EDX. En sélectionnant différentes bandes spectrales des spectres EDX, il est possible de reconstruire différentes images 3D, par exemple une image 3D par élément détecté. Une telle technique de tomographie couplée à une analyse EDX permet donc, en théorie, d'obtenir des images tomographiques hyperspectrales. Cette technique est appelée tomographie électronique analytique dans la suite.

En pratique cependant, plusieurs limitations rendent cette technique difficile à mettre en œuvre.

Une première limitation, d'ordre « matérielle », est liée au nombre de photons X, également dénommés coups, détectés lors de l'interaction du faisceau électronique avec la matière. Cette interaction produit des photons X dans toutes les directions de l'espace. Un microscope électronique à transmission conventionnel est équipé d'un détecteur EDX au silicium dopé lithium (Si(Li)) qui collecte les photons X émis dans sa direction. Une première solution consiste à augmenter le temps d'acquisition du spectre EDX, en maintenant le faisceau électronique focalisé sur un même point de l'objet à analyser. Cela augmente la dose d'électrons que reçoit l'objet. Les objets ne tolérant pas de fortes doses d'irradiation électronique ne peuvent pas être analysés par cette technique. Les temps d'acquisition très longs sont également dissuasifs pour la mise en œuvre de cette technique.

De récentes avancées en instrumentation ont permis d'obtenir plus de coups pour une dose d'électrons moindre. Au niveau des canons à électrons par exemple, le module X-FEG de Thermofisher permet d'améliorer la stabilité du faisceau et le courant électronique. Cela permet d'augmenter la brillance du faisceau tout en diminuant la dose. Au niveau du système de détection EDX, le système Super X de Thermofisher comprend 4 détecteurs SDD (Silicon Drift Detector) permettant de collecter 4 fois plus de coups lors des acquisitions. En outre, les SDDs présentent un temps mort diminué, un meilleur taux de collection (environ 50 fois plus de coups par seconde) et une température de travail beaucoup plus faible par rapport aux détecteurs classiques Si(Li).

Une deuxième limitation, d'ordre « logicielle », est liée au traitement de chaque spectre ou de chaque image spectrale obtenu par cette technique. Des logiciels commerciaux tels que Esprit (édité par Bruker), Digital Micrograph (édité par Gatan) ou Velox (édité par Thermofisher) ont été développés pour traiter un grand nombre de spectres et reconstruire point par point une image tomographique hyperspectrale.

Lepinay et al. [Lepin13] ont ainsi présenté la première reconstruction 3D de transistor de type FD-SOI par tomographie électronique analytique. D'autres publications ont également présenté des caractérisations de nanoparticules [Slate16], [Zhong17], de nanofils à structure «cœur-coquille» [Burdet16], ou encore de matériaux poreux [Rossouw16]

Cette méthode classique de modélisation des spectres proposée par les logiciels commerciaux reste cependant longue à mettre en œuvre. La fiabilité de cette méthode n'est en outre pas optimale. En effet, malgré l'augmentation du nombre de coups permise par les évolutions matérielles, les spectres acquis présentent typiquement un nombre de coups et un rapport signal sur bruit relativement faibles. Les pics d'émission contenus dans ces spectres peuvent s'apparenter à une distribution de pics de Dirac difficile ou impossible à modéliser.

Une solution consiste à recourir à des techniques d'analyses statistiques multivariées pour accélérer et faciliter la séparation des éléments de chaque spectre. Le document [Rossouw16] divulgue par exemple une telle méthode appliquée au traitement d'images STEM-EDX. Cette solution ne résout pas la problématique du manque de coups. L'analyse en composantes principales des pics d'émission des spectres EDX a également été mise en œuvre pour diminuer le bruit des images spectrales STEM EDX, tel que divulgué dans les documents [Paris10], [Lucas13], [Potap17a]. Cependant l'utilisation de l'analyse en composantes principales est encore controversée notamment en ce qui concerne son sens physique et la perte d'information liée à cette méthode d'analyse [Potap16], [Potap17b], [Spieg17].

De façon générale, le traitement des données de tomographie électronique analytique reste long et difficile. Le traitement se fait point par point et image par image. Le temps de traitement est ainsi multiplié par le nombre de projections utilisées pour la reconstruction tomographique. Le traitement implique en outre des étapes manuelles de la part de l'utilisateur. Cela augmente encore la difficulté de mise en œuvre de la tomographie électronique analytique.

Une solution permettant d'accélérer le traitement de données multidimensionnelles est fournie par la librairie python « Hyperspy » [Pena18]. Cette dernière permet de traiter une série d'images 2D en une seule fois. Elle regroupe également des fonctions d'analyse statistique multivariée et de quantification. Ces fonctions ne sont cependant pas optimales pour traiter des données de tomographie électronique analytique. En particulier, le rapport signal sur bruit relativement faible des spectres EDX limite la fiabilité des résultats de fit obtenus par « Hyperspy » pour la tomographie électronique analytique. En particulier, des pics d'émission proches en énergie sont difficilement séparables. Cela conduit à un biais dans les résultats de fit.

Un objet de la présente invention est de pallier au moins en partie certains des inconvénients mentionnés ci-dessus.

En particulier, un objet de la présente invention est de proposer un procédé de traitement d'images de tomographie électronique analytique permettant de traiter un grand nombre d'images en diminuant le temps de traitement et/ou en améliorant la qualité de fit des spectres EDX.

Un autre objet de la présente invention est de proposer un procédé de traitement d'images de tomographie électronique analytique limitant les interventions manuelles de l'utilisateur.

Les autres objets, caractéristiques et avantages de la présente invention apparaîtront à l'examen de la description suivante et des dessins d'accompagnement. Il est entendu que d'autres avantages peuvent être incorporés. Si le procédé de la présente invention est particulièrement avantageux dans le traitement de série d'images STEM EDX tomographiques, celui-ci peut être appliqué à une seule image STEM EDX. En particulier, certaines caractéristiques et certains avantages du procédé de traitement d'images peuvent s'appliquer *mutatis mutandis* à un procédé de traitement d'au moins une image STEM EDX acquise dans des conditions d'irradiation électronique faibles, dites « low dose ».

Les références de documents cités entre crochets ci-dessus sont explicitées dans la liste de références suivante :

[Lepin13] : Lepinay et al., "Chemical 3D Tomography of 28nm High K Metal Gâte Transistor", Micron, vol. 47, p43-49 (2013).

[Slate16] : Slater, Lewis, and Haigh, "Energy Dispersive X-Ray Tomography for 3D Elemental Mapping of Individual Nanoparticles", Journal of Visualized Experiments, n°113, (2016).

[Zhong17] : Zhong et al. "A bimodal tomographic reconstruction technique combining EDS-STEM and HAADF-STEM", Ultramicroscopy, vol.174, p35-45, 2017.

[Burde16] : Burdet et al., "A novel 3D Absorption correction method for quantitative EDX-STEM tomography", Ultramicroscopy, vol.160, p118-129, 2016.

[Rossouw16] : Rossouw et al., "Blind Source Séparation Aided Characterization of the Γ' Strengthening Phase in an Advanced Nickel-Based Superalloy by Spectroscopic 4D Electron Microscopy", Acta Materialia, vol. 107, p229-238, (2016).

[Paris10] : Parish and Brewer, "Multivariate Statistics Applications in Phase Analysis of STEM-EDS Spectrum Images", Ultramicroscopy, vol. 110, n°2, p134-143, (2010).

[Lucas13] : Lucas et al., "Multivariate Statistical Analysis as a Tool for the Segmentation of 3D Spectral Data", Micron, vol. 52-53, p49-56, (2013).

[Potap17a] : Potapov, Longo, and Okunishi, "Enhancement of Noisy EDX HRSTEM Spectrum-Images by Combination of Filtering and PCA", Micron, vol. 96, p29-37, (2017).

[Potap16] : Potapov, "Why Principal Component Analysis of STEM Spectrum-Images Results in 'abstract', Uninterpretable Loadings?", Ultramicroscopy, vol.160, p 197-212, (2016).

[Potap17b] : Potapov, "On the Loss of Information in PCA of Spectrum-Images", Ultramicroscopy, vol. 182, p191-194, (2017).

[Spieg17] : Spiegelberg and Rusz, "Can We Use PCA to Detect Small Signals in Noisy Data?", Ultramicroscopy, vol. 172, p40-46, (2017).

[Pena18] : Peña et al., "Hyperspy/Hyperspy V1.4.1.".

Un autre procédé de traitement d'images STEM est décrit dans: Pavel Potapov ET AL: "Optimal principal component analysis of STEM XEDS spectrum images", Advanced Structural and Chemical Imaging, vol. 5, no. 1, 9 avril 2019 (2019-04-09), XP055718198, DOI: 10.1186/ s40679-019-0066-0

## RESUME

Pour atteindre cet objectif, un premier aspect de l'invention concerne un procédé de traitement d'images acquises par microscopie électronique à balayage en transmission (STEM) couplées à une analyse dispersive en énergie de photo-électrons X (EDX), comprenant les étapes suivantes :

- Fournir une série d'images STEM comprenant chacune un ensemble de pixels, chaque pixel de chaque ensemble de pixels comprenant des données sous forme d'au moins un spectre EDX unitaire,
- Réaliser une analyse en composantes principales sur l'ensemble des données des spectres unitaires pour séparer des données significatives et des données non significatives, et pour reformer les spectres unitaires à partir des données significatives uniquement,

- Former un spectre somme par sommation des spectres unitaires, de façon à déterminer des pics d'émission contenus dans les spectres unitaires,
- Modéliser le spectre somme par ajustement des pics d'émission de ce spectre somme à partir de fonctions gaussiennes, de manière à déterminer des positions de ces pics d'émission, et de préférence au moins un écart type en largeur à mi-hauteur de ces pics d'émission vis-à-vis de la largeur à mi-hauteur de pics d'émission d'une raie de référence d'un spectre de référence,
- Modéliser chaque spectre unitaire à partir du modèle de spectre somme, en conservant au moins les positions, et de préférence les écarts types, déterminés précédemment et en ajustant au moins l'amplitude, et de préférence uniquement l'amplitude, des fonctions gaussiennes aux pics d'émission des spectres unitaires,
- De façon optionnelle, former à partir d'au moins un paramètre issu des modèles de spectres unitaires, une série d'images paramétriques et/ou une image 3D paramétrique.

Ainsi, l'invention permet de traiter un grand nombre de données, typiquement des spectres de dispersion d'énergie des rayons X, dits spectres EDX, associés à chaque pixel de chaque image d'une série d'images acquises par microscopie électronique tomographique.

Le spectre somme est formé par sommation des spectres unitaires issus de la série d'images - par exemple un empilement de projections spectrales tomographiques. Ces spectres unitaires peuvent avoir subi un ou plusieurs traitements préalables, tels qu'une ou des opérations de regroupement ou « binning » selon la terminologie anglo-saxonne, et/ou une analyse en composantes principales.

Une analyse en composantes principales (PCA) peut notamment être appliquée sur l'ensemble des données des spectres unitaires de la série d'images. Cela permet d'avoir la plus grande statistique de données possible pour réaliser la PCA. La pertinence de la PCA est ainsi optimisée.

La PCA permet d'isoler les données significatives des images, c'est-à-dire les données présentant une grande variance statistique, de celles qui sont assimilables à du bruit. Cela permet de reformer des spectres unitaires comprenant des pics d'émission de forme environ gaussienne. Cela permet d'améliorer la modélisation ultérieure des spectres unitaires. Cette analyse en composantes principales est de préférence effectuée avant la formation du spectre somme. Cela permet de faciliter et/ou d'améliorer les étapes suivantes du procédé de traitement d'images. Une modélisation automatique des spectres unitaires peut en particulier être facilitée par la réalisation préalable d'une telle analyse en composantes principales. Les données non significatives assimilables à du bruit peuvent en outre être supprimées. Cela permet d'améliorer le rapport signal sur bruit des spectres unitaires et/ou du spectre somme.

La PCA permet en outre de reformer les spectres unitaires à partir de données significatives. Les spectres unitaires ainsi reformés présentent des pics d'émission présentant des formes de fonction gaussienne. Cela est particulièrement avantageux pour modéliser ces spectres unitaires. Ainsi, lorsque les spectres unitaires sont initialement formés de pics d'émission s'apparentant à des pics de Dirac, la PCA permet de reformer ces spectres avec des pics d'émission ayant la forme de fonctions gaussiennes, qui peuvent ensuite être modélisés.

Le spectre somme permet d'établir un modèle fiable permettant de déterminer un certain nombre de pics d'émission potentiellement contenus dans les spectres unitaires. Un tel modèle établi à partir du spectre somme permet en outre de séparer de façon fiable des pics d'émission proches en énergie.

Ce modèle comprend typiquement des fonctions gaussiennes au niveau des pics d'émission du spectre somme. Un fit, par exemple via un algorithme de minimisation basé sur une méthode des moindres carrés, permet d'ajuster ces fonctions gaussiennes aux pics d'émission du spectre somme. Le fit est typiquement réalisé en modifiant, pour chaque gaussienne, les paramètres d'amplitude, de position en énergie, de largeur à mi-hauteur et/ou d'écart-type en énergie (proportionnel à la largeur à mi-hauteur). La position de chacun des pics du spectre somme est ainsi déterminée.

Les éléments du tableau périodique à l'origine des pics d'émission du spectre somme peuvent ainsi être précisément déterminés. La fiabilité des résultats de fit obtenus par le procédé est améliorée.

Avantageusement, ce modèle du spectre somme est appliqué à chaque spectre unitaire. Le fit de ce modèle sur les spectres unitaires est réalisé sous contrainte, en fixant les positions et éventuellement les écarts types tels que déterminés précédemment, et en ajustant de préférence uniquement l'amplitude des fonctions gaussiennes aux pics d'émission des spectres unitaires. Cela permet de fiabiliser l'ajustement du modèle du spectre somme aux différents spectres unitaires. Un tel ajustement est typiquement réalisé par un algorithme de minimisation. Cet algorithme cherche à minimiser l'écart entre les paramètres d'ajustement et les données des spectres unitaires. En fixant au moins les positions parmi les paramètres d'ajustement, les variations de positions des gaussiennes sont supprimées. Cela permet d'éviter des solutions aberrantes dans lesquelles les gaussiennes se sont déplacées d'un pic d'émission à un autre lors de l'ajustement, notamment pour les spectres unitaires ne contenant pas tous les pics d'émission présents dans le spectre somme. En fixant les positions, si le spectre unitaire ne comprend pas un pic d'émission donné, l'amplitude de la gaussienne modélisant ce pic d'émission est ajustée à une valeur environ nulle. Les erreurs d'ajustement induites par une variation du paramètre position des gaussiennes sont ainsi supprimées. Le biais sur les résultats de fit est ainsi limité, voire éliminé, par rapport aux solutions existantes. La fiabilité de la modélisation est optimisée. En outre, le rapport signal sur bruit du spectre somme est très supérieur à celui de chacun des spectres unitaires. Les positions et les écarts-types déterminés à partir du spectre somme sont donc beaucoup plus précises. Il est donc particulièrement avantageux de conserver ces positions et écarts-types lors de la modélisation des spectres unitaires. Chaque spectre unitaire bénéficie ainsi de valeurs de positions et d'écarts-types précisément déterminés, ainsi que de valeurs d'amplitude fiables. Les éléments du tableau périodique à l'origine des pics d'émission de chaque spectre unitaire peuvent ainsi être précisément déterminés. La fiabilité des résultats de fit obtenus par le procédé est encore améliorée.

A partir des modèles de spectres unitaires, il est ensuite possible de sélectionner une partie des données de ces spectres unitaires modélisés, par exemple des amplitudes sur une bande d'énergie étroite, de façon à créer une série d'images paramétriques, par exemple des cartographies élémentaires.

Selon un autre aspect, la présente invention porte sur un produit programme d'ordinateur, ou sur un média non-transitoire lisible par un ordinateur, comprenant des instructions, qui lorsqu'elles sont exécutées par au moins un processeur, effectue les étapes du procédé selon l'invention mentionné ci-dessus.

## BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :

La figure 1 illustre un diagramme du procédé de traitement de données selon un mode de réalisation de la présente invention.

La figure 2A est une image STEM HAADF typique, pouvant être couplée à une analyse EDX pour chaque pixel de cette image.

La figure 2B illustre deux spectres EDX unitaires issus de deux pixels de l'image illustrée à la figure 2A.

La figure 3 illustre un résultat d'analyse en composantes principales des spectres unitaires, permettant par exemple d'écarter des données contribuant au bruit des spectres unitaires, selon un mode de réalisation de la présente invention.

La figure 4 illustre deux spectres EDX unitaires débruités, après binning et formés à l'issue de l'analyse en composantes principales, selon un mode de réalisation de la présente invention, les deux spectres unitaires étant issus de deux zones de pixels localisées au niveau des pixels matérialisés sur l'image illustrée à la figure 2A.

La figure 5 montre un spectre somme formé à partir des spectres unitaires débruités en partie illustrés à la figure 4, après application d'un filtre de type top hat, selon un mode de réalisation de la présente invention. Le signal de fond déterminé selon un mode de réalisation de la présente invention est également présenté sur cette figure 5A, en superposition sur le spectre somme.

La figure 6A illustre un filtrage du signal de fond d'un spectre par un filtre de type « tophat », selon un mode de réalisation de la présente invention.

La figure 6B montre la forme de l'élément structurant d'un filtre top hat selon un mode de réalisation de la présente invention.

La figure 7A illustre une superposition d'un spectre somme filtré (sans signal de fond) et d'un modèle issus de données théoriques à base de fonctions gaussiennes, selon un mode de réalisation de la présente invention.

La figure 7B montre un agrandissement d'une partie du spectre somme et du modèle superposé illustrés à la figure 7A, dans le domaine des faibles énergies de dispersion.

La figure 8A illustre la superposition du spectre somme filtré (sans signal de fond) et du modèle à base de fonctions gaussiennes de la figure 7A, après fit, selon un mode de réalisation de la présente invention.

La figure 8B montre un agrandissement d'une partie du spectre somme et du modèle superposé illustrés à la figure 8A, dans le domaine des faibles énergies de dispersion.

La figure 9A illustre une superposition d'un spectre unitaire et du modèle à base de fonctions gaussiennes illustré à la figure 8A, selon un mode de réalisation de la présente invention.

La figure 9B illustre la superposition du spectre unitaire et du modèle à base de fonctions gaussiennes de la figure 9A, après fit, selon un mode de réalisation de la présente invention.

La figure 10A reproduit l'agrandissement d'une partie du spectre somme et du modèle superposé après fit illustrés à la figure 8B, dans le domaine des faibles énergies de dispersion.

La figure 10B illustre une cartographie élémentaire issue de la raie M du Tellure modélisée pour chaque spectre unitaire à partir du modèle de spectre somme illustré à la figure 10A, après mise en œuvre du procédé selon un mode de réalisation de la présente invention.

La figure 10C illustre une cartographie élémentaire issue de la raie K de l'Oxygène modélisée pour chaque spectre unitaire à partir du modèle de spectre somme illustré à la figure 10A, après mise en œuvre du procédé selon un mode de réalisation de la présente invention.

La figure 10D illustre une cartographie élémentaire issue de la raie L du Germanium modélisée pour chaque spectre unitaire à partir du modèle de spectre somme illustré à la figure 10A, après mise en œuvre du procédé selon un mode de réalisation de la présente invention.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

## DESCRIPTION DETAILLEE

Avant d'entamer une revue détaillée de modes de réalisation de l'invention, il est rappelé que l'invention selon son premier aspect comprend notamment les caractéristiques optionnelles ci-après pouvant être utilisées en association ou alternativement :
Selon un exemple, le procédé comprend en outre une étape d'analyse en composantes principales sur l'ensemble des données des spectres unitaires pour séparer des données significatives et des données non significatives, et pour reformer les spectres unitaires à partir des données significatives uniquement.

Cela permet d'améliorer la forme des pics d'émission contenus dans les spectres unitaires. La modélisation ultérieure de ces pics d'émission est ainsi facilitée. Cela permet également d'éliminer des données non significatives telles que du bruit. Le rapport signal sur bruit est ainsi amélioré.

Selon un exemple, seules les n premières composantes principales issues de l'analyse en composantes principales sont conservées pour reformer les spectres unitaires, avec $4 \leq n \leq 10$, typiquement n = 8. Cela permet notamment de trier une partie des données, et d'écarter des données contribuant au bruit de fond des spectres unitaires. Cela permet de débruiter les spectres unitaires.

Selon un exemple, la modélisation du spectre somme est effectuée à partir d'un modèle comprenant une distribution de fonctions gaussiennes, ce modèle étant ajusté au spectre somme par variation des paramètres respectifs d'amplitude, d'écart-type en énergie et de position en énergie.

Selon un exemple, avant ajustement du modèle au spectre somme, l'écart type en énergie est initialement choisi en fonction d'une résolution limite des détecteurs EDX utilisés pour l'acquisition des spectres unitaires, et les positions en énergie sont initialement choisies en fonction de positions théoriques de raies d'émissions d'éléments chimiques.

Selon un exemple, chaque spectre unitaire est modélisé à partir du modèle de spectre somme issu de l'ajustement, en conservant l'écart type ajusté et les positions en énergie ajustées pour chacune des fonctions gaussiennes du modèle de spectre somme, et en ajustant uniquement l'amplitude de ces fonctions gaussiennes aux pics d'émission des spectres unitaires.

Selon un exemple, la modélisation du spectre somme est effectuée de façon à déterminer (112) un écart type en largeur à mi-hauteur entre la fonction gaussienne modélisant le pic d'émission de la raie Ka du manganèse Mn du spectre somme, et une fonction gaussienne de référence représentant un pic d'émission de référence de la raie Ka du manganèse Mn, et dans lequel chaque spectre unitaire est modélisé à partir du modèle de spectre somme en conservant ledit écart type pour chacune des fonctions gaussiennes du modèle de spectre somme et en ajustant uniquement l'amplitude de ces fonctions gaussiennes aux pics d'émission des spectres unitaires.

Selon un exemple, les positions des pics d'émission déterminées à partir du spectre somme modélisé sont comparées à des positions de référence de pics d'émission d'au moins un spectre de référence. Cela permet d'identifier les éléments chimiques à l'origine des pics d'émission.

Selon un exemple, le procédé comprend une étape de formation de spectres moyens à partir de sous-ensembles de spectres unitaires de pixels adjacents de la série d'images, les spectres moyens ainsi formés remplaçant les spectres unitaires. Cela permet de réduire la taille des données initiales. Le rapport signal sur bruit de chacun des spectres moyens ainsi formés est en outre amélioré par rapport au rapport signal sur bruit de chacun des spectres unitaires initiaux.

Selon un exemple, l'analyse en composantes principales est réalisée à partir des spectres moyens. Cela facilite et améliore la sélection des données significatives à partir des composantes principales de ladite analyse.

Selon un exemple, le procédé comprend en outre, après formation du spectre somme, une étape de filtrage d'un signal de fond de ce spectre somme. La modélisation ultérieure d'un tel spectre somme est facilitée par ce filtrage.

Selon un exemple, le filtrage du signal de fond est exécuté avant modélisation du spectre somme, par une opération morphologique de type « tophat » comprenant un arasement des pics d'émission du spectre somme configuré pour isoler le signal de fond, puis une soustraction de ce signal de fond isolé du spectre somme initial.

Selon un exemple alternatif à l'exemple précédent, le filtrage du signal de fond du spectre somme est exécuté lors de la modélisation du spectre somme par fit d'une fonction affine. Cela permet d'automatiser l'étape de filtrage du signal de fond.

Selon un exemple, le procédé comprend en outre, après modélisation des spectres unitaires, une étape de formation d'une série d'images paramétriques à partir d'au moins un paramètre issu des modèles de spectres unitaires.

Selon un exemple, la série d'images STEM EDX est acquise dans des conditions de tomographie.

Selon un exemple, le procédé comprend en outre, après formation de la série d'images paramétriques, une étape de reconstruction d'une image 3D paramétrique à partir de la série d'images paramétriques.

Selon un exemple, le procédé comprend en outre une étape de réduction du bruit des spectres unitaires, par exemple par décomposition en ondelettes ou par filtrage par une fonction gaussienne. Cette réduction du bruit peut se faire de façon alternative ou en combinaison avec la réduction du bruit réalisée lors de l'analyse en composantes principales.

Selon un exemple, le fit des pics d'émission du spectre somme lors de la modélisation du spectre somme est exécuté par une méthode de minimisation des moindres carrés sur les positions, les écarts-types en largeurs à mi-hauteur, et les amplitudes des fonctions gaussiennes.

La microscopie électronique à balayage en transmission (STEM) réunit les principes de fonctionnement de la microscopie électronique à balayage et de la microscopie électronique en transmission. Typiquement, un faisceau d'électrons focalisés traverse l'échantillon à imager. Un système de balayage (typiquement des lentilles magnétiques) permet à ce faisceau de balayer la surface de l'échantillon. La microscopie électronique à balayage en transmission est largement connue et explicitée au travers d'ouvrages de référence tels que « Transmission Electron Microscopy : A Textbook for Materials Science, David B. Williams & C. Barry Carter, Springer (2009) ». Celle-ci peut être mise en œuvre selon différents modes d'observation, par exemple et de façon non limitative : en champ clair (BF Bright Field), en champ sombre aux grands angles (HAADF High-angle annular dark-field imaging).

Dans le cadre de la présente invention, le procédé de traitement de données d'images STEM EDX est particulièrement avantageux pour le traitement d'une série d'images 2D destinées à une reconstruction 3D tomographique de l'objet imagé. A cet effet, chaque image 2D de la série d'images correspond à une projection de l'objet dans un plan perpendiculaire à la direction d'observation. En inclinant l'objet à imager selon différents angles d'inclinaison précis (appelés « angles de tilt ») à l'aide du goniomètre du microscope, et en réajustant pour chaque image la mise au point de la projection, on obtient une série de projections de ce même objet. Cette série permet ensuite de reconstruire l'objet en trois dimensions (3D) à l'aide de différents algorithmes configurés pour passer d'un ensemble de projections à une représentation volumique. La résolution finale dans le volume reconstruit dépend notamment du nombre de projections acquises et de l'angle maximal de tilt. Pour améliorer cette résolution finale, un grand nombre de projections, par exemple supérieur à 50, est nécessaire. La quantité de données EDX contenues dans ces projections (images hyperspectrales) devient alors très importante. Le procédé selon l'invention permet d'appréhender cette grande quantité de données de façon semi-automatique, avec une robustesse améliorée. Les résultats des reconstructions 3D paramétriques à partir de l'ensemble des spectres EDX de la série de projections, présentent une fiabilité améliorée.

Un spectre EDX présente typiquement une pluralité de pics d'émission distribués à différentes énergies en abscisse (en keV), et présentant différentes amplitudes ou intensités en ordonnée (en nombre de coups).

On entend, par spectre unitaire, un spectre EDX acquis au niveau d'un pixel de l'image. Il est possible d'acquérir 2 spectres EDX ou plus au niveau d'un même pixel de l'image. Chaque spectre acquis au niveau d'un même pixel est un spectre unitaire.

Ces spectres unitaires peuvent être sommés pour former des spectres moyens présentant un rapport signal sur bruit amélioré. Par exemple, un spectre moyen peut être issu d'une moyenne de spectres unitaires acquis au niveau d'un même pixel. Un spectre moyen peut être issu d'une moyenne de spectres unitaires acquis au niveau de plusieurs pixels adjacents, soit au sein d'une même image, soit à partir de plusieurs images consécutives de la série d'images, soit par combinaison de pixels adjacents d'une même image et de pixels consécutifs de la série d'images. De façon générale, un spectre moyen peut être issu d'une combinaison de spectres unitaires acquis au niveau d'un même pixel et/ou au niveau de pixels adjacents d'une même image, et/ou dans des images consécutives de la série d'images. Une telle opération de regroupement est couramment appelée « binning » selon la terminologie anglo-saxonne. Ainsi, l'adjacence peut être spatiale et/ou temporelle.

Dans la suite, les pics d'émission correspondent à des raies d'émission de photons X caractéristiques d'un élément chimique de la classification périodique des éléments. Ils sont notamment proportionnels aux concentrations d'éléments chimiques présents dans l'objet à analyser. Ces pics d'émission présentent théoriquement une forme gaussienne. Dans le cadre de la présente invention, les pics d'émission sont modélisés par ajustement (fit) de fonctions gaussiennes. Ces fonctions gaussiennes peuvent être asymétriques. Ces fonctions gaussiennes peuvent résulter plus généralement d'une seule fonction gaussienne, d'une combinaison de fonctions gaussiennes, d'une combinaison d'au moins une fonction gaussienne et d'au moins une autre fonction, par exemple une fonction lorentzienne.

Les paramètres de chaque fonction gaussienne du modèle sont par exemple : l'amplitude, la largeur à mi-hauteur, la position, l'écart-type en largeur à mi-hauteur, l'intégrale de cette fonction.

L'écart-type en largeur à mi-hauteur est synonyme d'écart-type en énergie. Les termes « fit » et « ajustement » sont employés en synonymes.

L'analyse en composantes principales est une méthode d'analyse statistique multivariée. Elle permet de déterminer notamment des composantes principales représentatives de certaines distributions de données. Il existe de nombreuses variantes permettant d'identifier et de représenter ces distributions de données. Toutes ces variantes relevant plus généralement des méthodes d'analyse statistique multivariée sont assimilées à une analyse en composantes principales dans le cadre de la présente invention.

On entend, par spectre somme, le spectre comprenant l'ensemble des pics d'émission contenus dans les spectres unitaires et/ou dans les spectres moyens.

Les termes « sensiblement », « environ », « de l'ordre de » signifient « à 10% près ».

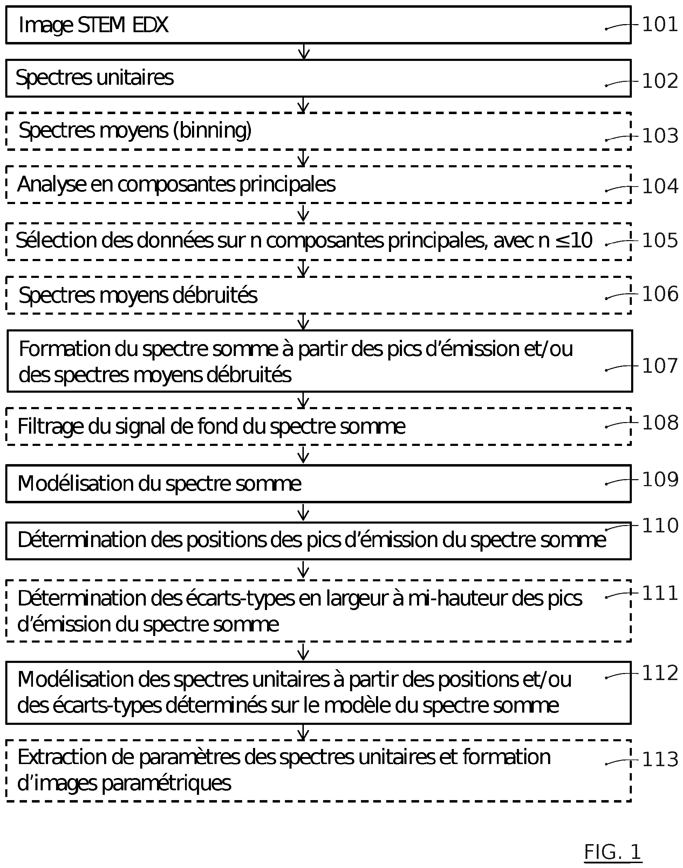

Le principe de l'invention est illustré à la figure 1 qui regroupe succinctement les différentes étapes du procédé selon l'invention, sous forme de diagramme. Le procédé 100 de traitement d'images STEM EDX comprend typiquement les étapes suivantes :

Une série d'images STEM EDX est d'abord fournie 101. Cette série d'images peut éventuellement comprendre une seule image STEM EDX. Cette série d'images comprend préférablement plusieurs dizaines d'images STEM EDX, par exemple entre 30 et 40 images. Ces images STEM EDX sont de préférence des projections acquises successivement à différents angles de projection selon des conditions d'acquisition de tomographie.

Ces images STEM EDX contiennent typiquement au moins un spectre unitaire EDX par pixel. Un ensemble de spectres unitaires issu de la série d'images est ainsi fourni 102.

Une étape optionnelle de formation de spectres moyens 103 est de préférence effectuée. Cette étape dite de « binning » vise notamment à réduire le nombre de spectres total. Ainsi, le temps de traitement de l'analyse en composantes principales à l'étape suivante est diminué. Cette étape de binning permet également d'améliorer le rapport signal sur bruit des spectres à traiter. Les conditions d'analyse en composantes principales à l'étape suivante sont ainsi optimisées.

Une analyse en composantes principales est effectuée 104 sur les spectres à traiter, i. e. les spectres unitaires ou de préférence les spectres moyens, de façon à trier les données des spectres correspondant à des pics d'émission, et celles correspondant à du bruit.

De préférence, une sélection des données correspondant aux pics d'émission est effectuée 105. Cela permet de réduire le bruit des spectres unitaires et/ou moyens. Des spectres moyens « débruités » peuvent ainsi être obtenus 107.

Un spectre somme comprenant l'ensemble des pics d'émission déterminés à partir des spectres unitaires et/ou moyens est ensuite formé 108. Ce spectre somme peut être obtenu par sommation des spectres moyens débruités.

Les spectres EDX de façon générale et le spectre somme en particulier comprennent typiquement un signal de fond appelé « brehmsstrahlung » induit par l'interaction électrons-matière lors de l'acquisition des spectres. Ce signal de fond est largement connu et peut être filtré par différentes techniques ou méthodes de filtrage. De préférence, une étape de filtrage de ce signal de fond est effectuée 109.

Le spectre somme est ensuite modélisé 110 à partir d'une combinaison de fonctions gaussiennes. Une telle modélisation est classique et permet notamment de déterminer 111 les positions (en énergie) des pics d'émission du spectre somme. Par exemple, les pics d'émissions à modéliser peuvent être choisis par l'utilisateur à l'aide de sa connaissance a priori de l'échantillon, ou à partir d'une observation du spectre somme ou encore par détection automatique des pics en comparant leur position avec des positions théoriques en énergie données par exemple par une base de données. La détermination 111 est d'autant meilleure que le nombre de coups et le rapport signal sur bruit sont élevés. Le spectre somme formé à partir de l'ensemble des spectres unitaires via l'analyse en composantes principales regroupe avantageusement l'ensemble des pics d'émission et présente avantageusement un tel rapport signal sur bruit élevé. La détermination 111 de l'ensemble des positions des pics d'émission est ainsi effectuée de façon précise et fiable sur le spectre somme.

Les positions des pics d'émission ainsi déterminées 111 peuvent être comparées à des positions théoriques de pics d'émission, issues par exemple d'au moins un spectre de référence d'une base de données ou d'un ouvrage de référence. Cela permet d'identifier les éléments chimiques à l'origine des pics d'émission du spectre somme. Les écarts-types entre les largeurs à mi-hauteur déterminées après ajustement et les largeurs à mi-hauteur de référence ou théoriques peuvent également être déterminés 112. Cela permet de calibrer a *posteriori* les spectres unitaires acquis par les détecteurs du microscope, sans qu'il soit nécessaire de calibrer précisément lesdits détecteurs a *priori.*

Le modèle de gaussiennes ajusté au spectre somme (modèle global) est ensuite appliqué à chacun des spectres unitaires et/ou moyens de manière à modéliser 113 chacun de ces spectres. Les positions et/ou les écarts-types préalablement déterminés sont fixés lors de l'ajustement paramétrique (fit) du modèle global à chacun des spectres unitaires et/ou moyens. Cela permet d'éviter une dérive aberrante des gaussiennes lors du fit, qui peut survenir en particulier lorsque le rapport signal sur bruit et/ou le nombre de coups est faible. Seule l'amplitude des gaussiennes du modèle global est ainsi ajustée et déterminée pour chacun des spectres unitaires et/ou moyens.

Une telle amplitude, pour une raie d'émission donnée, en chaque pixel d'une série d'images permet par exemple de déceler la présence de l'élément chimique donnant lieu à cette raie d'émission au sein de la série d'images. Des images paramétriques, par exemple en amplitude ou en intégrale de pics d'émission, peuvent ainsi être formées 114. Une cartographie élémentaire 3D peut ainsi être formée de façon fiable et précise.

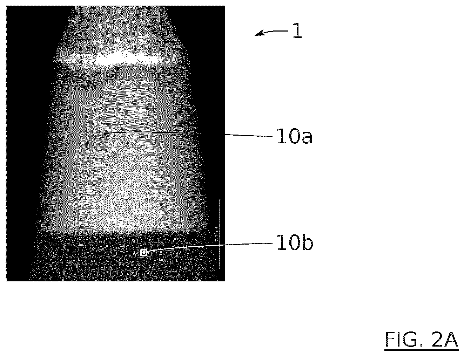

L'invention va maintenant être décrite en détail au travers d'un exemple non limitatif illustré aux figures 2A à 10D.

L'objet à imager est ici un échantillon de germanium tellure sous forme de film mince, tel qu'utilisé dans des dispositifs de mémoire à changement de phase. L'oxydation de ces films minces de germanium tellure modifie et perturbe le fonctionnement de la mémoire. Le procédé selon l'invention est mis en œuvre de façon à mieux comprendre les mécanismes d'oxydation d'un tel film mince.

La figure 2A montre un tel échantillon préparé sous forme de pointe tomographique par faisceau d'ion focalisé FIB (Focused Ion Beam). L'image 1 présentée à la figure 2A est une image STEM-EDX (Scanning Electron Transmission Microscopy - Energy Dispersive X-ray spectroscopy) d'une série d'images acquises à des angles de projection compris entre -90° et 90°, chaque image étant séparée par un pas de 5° en rotation autour de la pointe tomographique. Une telle série d'images permet notamment de reconstruire un volume 3D comprenant un ensemble de pixels, également dénommé image 3D.

Cette série d'images peut être typiquement réalisée à l'aide d'un microscope corrigé TITAN THEMIS de chez ThermoFisher avec une tension d'accélération de 200keV et équipé d'un système Super X munis de 4 détecteurs au silicium à diffusion SDD (Silicon Drift Detector). Chaque image ou projection comprend ici 300x260 pixels. Chaque projection est typiquement obtenue en plusieurs cycles de balayage de faisceau, avec par exemple un courant de faisceau de 200 pA et un temps d'acquisition par pixel de 40$\mu$s, pour un total de 5min par projection. Les spectres unitaires EDX sont ici enregistrés sur 4096 canaux d'énergie avec une largeur spectrale de 10 ev par canal, soit une gamme spectrale couvrant environ 40keV. Une telle plage spectrale permet de détecter la totalité des éléments chimiques (Te, Ge, O) présents dans l'échantillon. Le nombre de canaux et/ou la gamme spectrale des spectres EDX peut être réduite ou augmentée, en fonction des besoins.

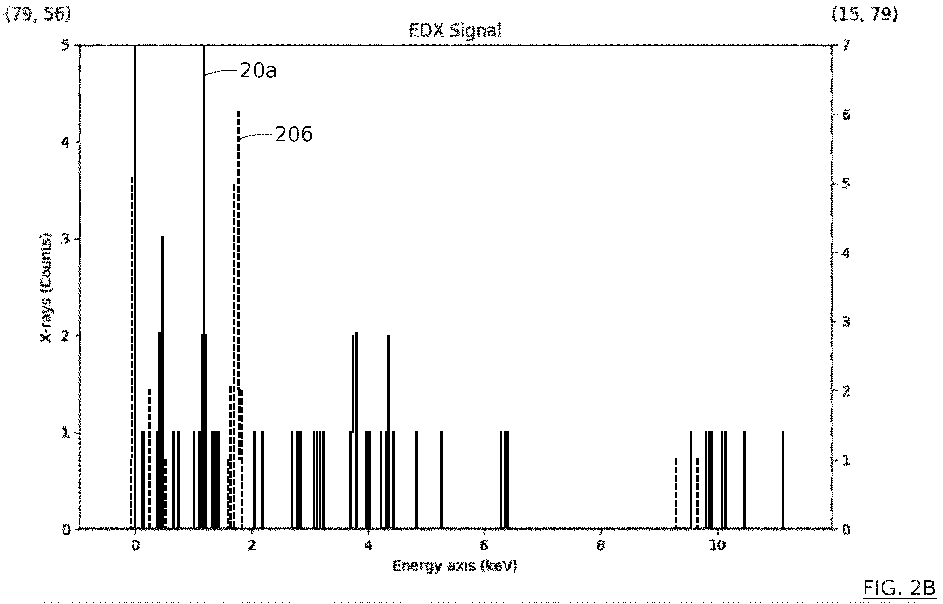

La figure 2B montre 2 spectres unitaires 20a, 20b EDX issus de deux pixels 10a, 10b correspondants dans l'image STEM-EDX illustrée à la figure 2A. Ces spectres unitaires 20a, 20b sont typiquement très bruités et présentent un faible nombre de coups, dans les conditions d'acquisition mentionnées ci-dessus.

Le traitement de tous les spectres unitaires 20a, 20b de toutes les images 1 se fait de préférence automatiquement, par exemple à l'aide d'un script python écrit au préalable, selon les étapes suivantes.

Les données des spectres unitaires 20a, 20b sont chargées et stockées sur un support mémoire d'ordinateur. Ces données sont de préférence moyennées entre deux canaux d'énergie adjacents. Elles sont également de préférence moyennées entre quatre pixels adjacents du volume 3D. La taille des cubes de données tomographiques est ainsi réduite. Le temps de calcul et le besoin en ressources informatiques matérielles, en particulier en mémoire vive, sont ainsi réduits. De telles opérations dites de binning sont connues et peuvent être réalisées par exemple à l'aide de fonctions de la librairie Hyperspy de python, qui est une librairie dédiée à l'analyse de données multidimensionnelles. Les spectres unitaires sont transformés en spectres moyens à l'issue de ces opérations de binning.

Dans cet exemple, une analyse en composantes principales, ou PCA, est ensuite réalisée sur ces spectres moyens. Cette analyse peut être alternativement réalisée directement sur les spectres unitaires. Une telle analyse PCA est connue en soi et peut être appliquée à l'aide d'une autre fonction de la librairie Hyperspy, sur l'ensemble des images de la série d'images STEM-EDX. Les variables de la PCA sont les canaux d'énergie des spectres unitaires à analyser ou des spectres moyens à analyser.

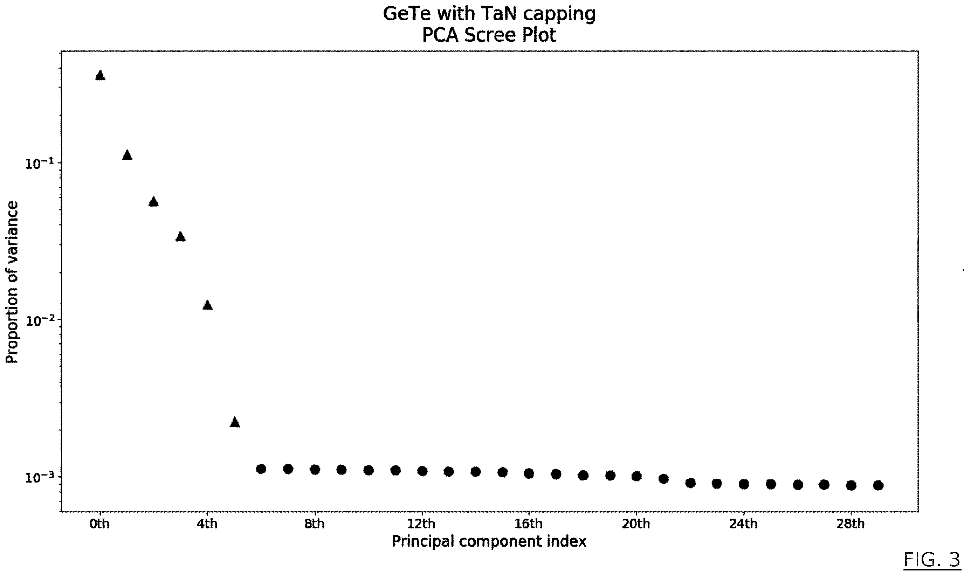

La figure 3 présente un diagramme de composantes principales typique, issu d'une telle analyse. Ce diagramme permet de distinguer différents types de données contribuant aux spectres. Dans l'exemple décrit ici, les 6 premières composantes principales (représentées par des triangles sur la figure 3) sont considérées comme portant une information physique utile. Les composantes suivantes (représentées par des ronds sur la figure 3) correspondent typiquement à des données de bruit dans les spectres. Le diagramme présenté à la figure 3 est tronqué à partir de la 30$^{\text{ème}}$ composante (la PCA crée toujours le même nombre de composantes que de variables), car la variance des composantes décroît de façon continue et devient rapidement négligeable.

Un taux de variance faible, par exemple inférieur à 5%, et constant peut être caractéristique d'un bruit. Ainsi en sélectionnant les 6 premières composantes, toutes les composantes suivantes sont assimilées au bruit avec des variances très proches de 0. Les données regroupées au sein des autres composantes peuvent donc être supprimées. Au moins une partie du bruit est ainsi filtrée à l'issue de cette analyse en composantes principales. Les données regroupées au sein des 6 premières composantes sont conservées et sommées de façon à former un spectre somme comprenant l'ensemble des pics d'émission présents dans les spectres unitaires EDX.

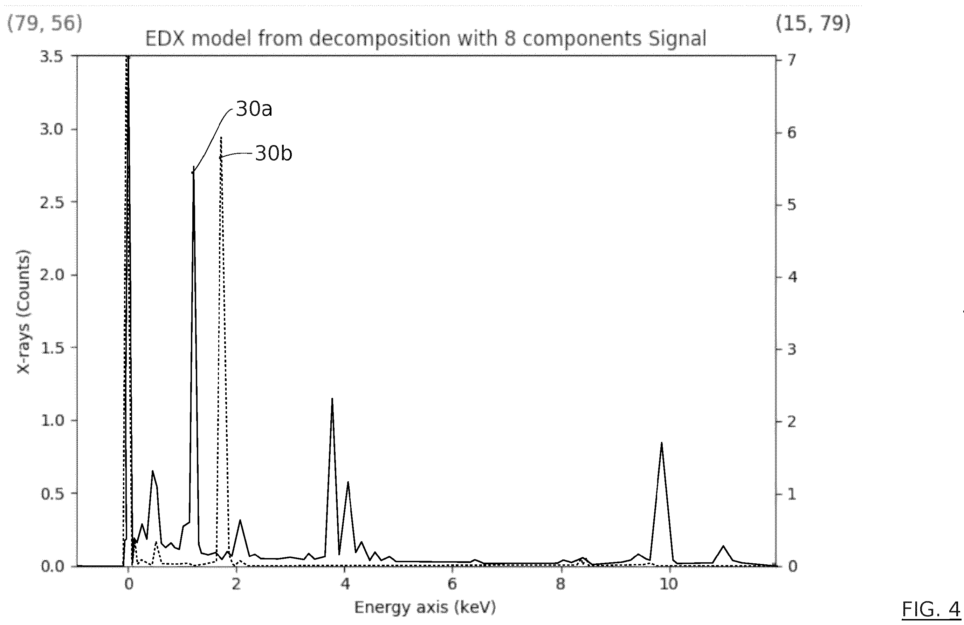

Selon une possibilité illustrée à la figure 4, des spectres moyens débruités 30a, 30b peuvent être obtenus après PCA, par reconstruction à partir des seules données sélectionnées pour chacun des spectres moyens.

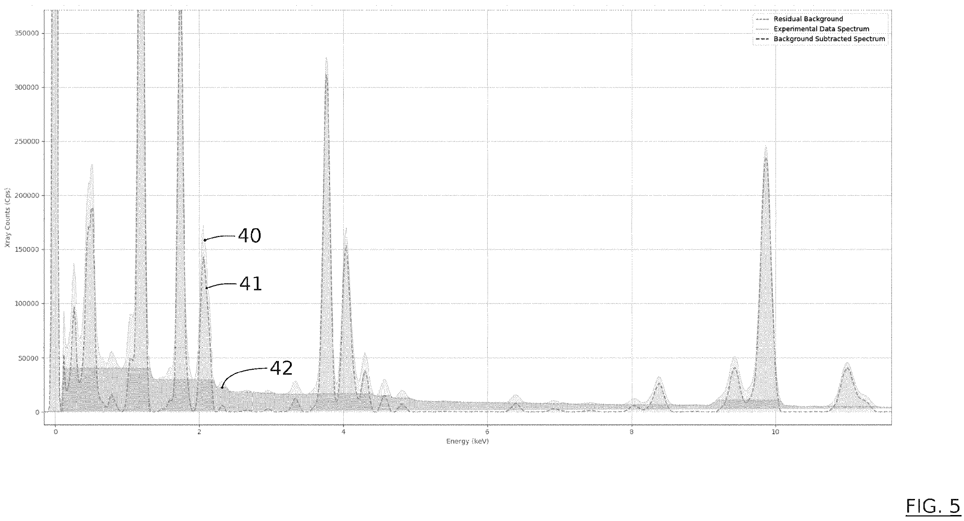

Le spectre somme 40, 41 est illustré à la figure 5. Le spectre somme 40 « initial » comprend typiquement un signal de fond 42 (bremsstrahlung) en plus des pics d'émission.

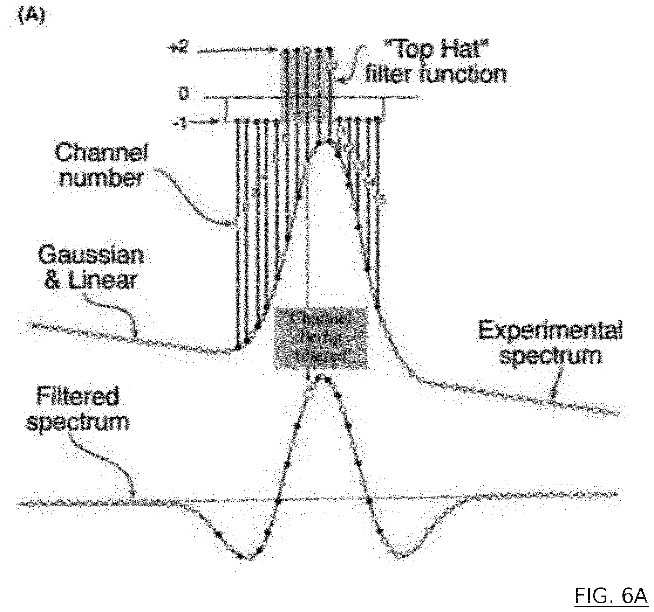

Une soustraction du signal de fond 42 par une opération morphologique appelée « tophat filtering » connue de la littérature (par exemple [Williams&Carter09]) est de préférence effectuée. Le principe de cette opération est illustré à la figure 6A. Cette opération consiste généralement à enlever les pics d'émission afin d'isoler le signal de fond 42. Ce dernier est alors soustrait au spectre somme initial 40. Un spectre somme 41 « filtré » est ainsi obtenu (figure 5).

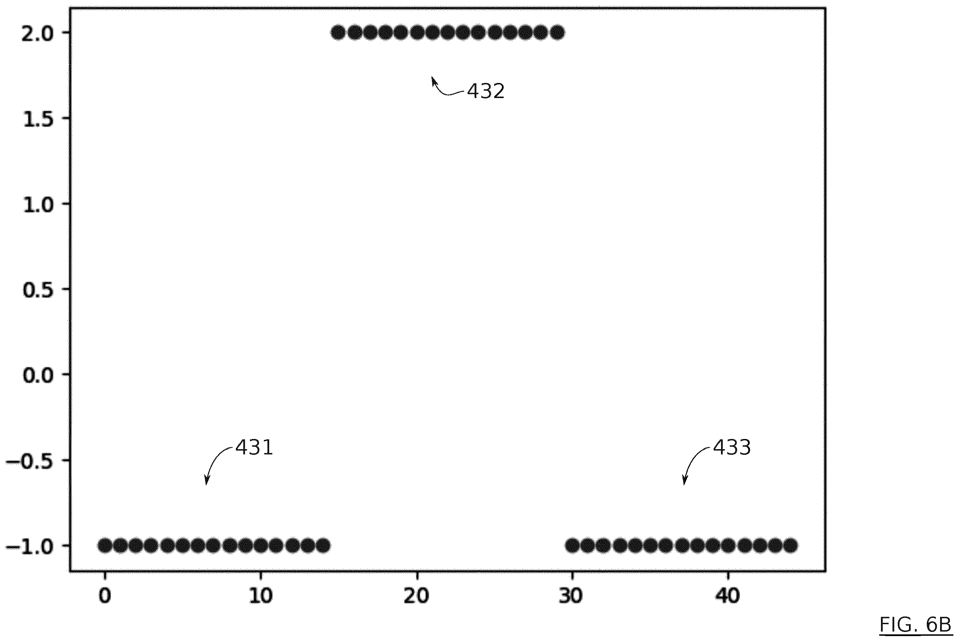

Cette opération peut être effectuée via une fonction de la librairie Scipy de Python. Cette opération nécessite typiquement le choix d'au moins une valeur déterminant la taille du filtre « tophat ». Un filtre « tophat» comprenant 3 parties 431, 432, 433 présentant chacune une largeur égale à 15 canaux d'énergie, soit environ 150eV, est présenté en figure 6B. Ce filtre peut être déterminé par des critères visuels par exemple, et permet typiquement de soustraire de façon optimale le signal de fond 42 du spectre somme 40. D'autres opérations de filtrage ou de soustraction du signal de fond 42 peuvent être mises en œuvre.

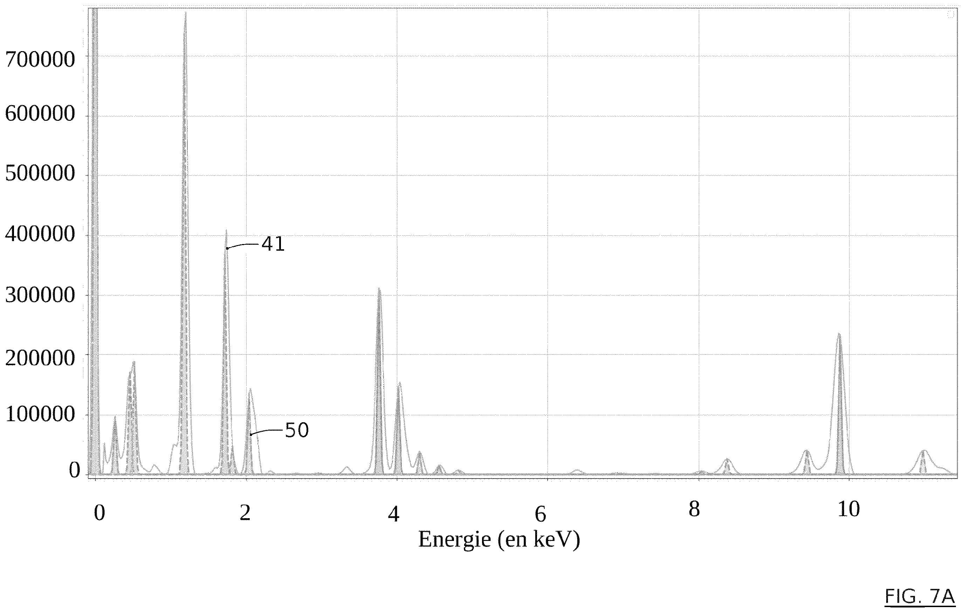

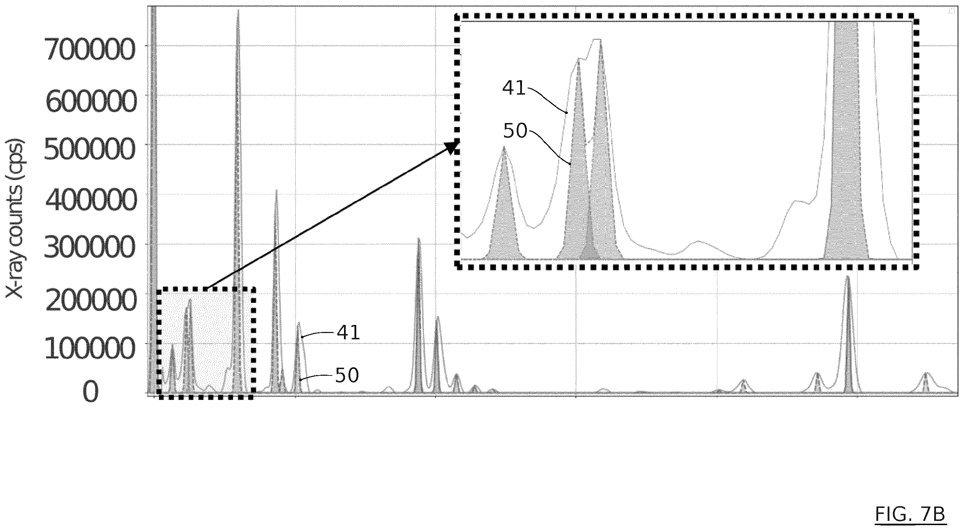

Tel qu'illustré aux figures 7A et 7B, un modèle 50 comprenant une pluralité de fonctions gaussiennes est ensuite superposé au spectre somme, de préférence au spectre somme filtré 41. Le spectre somme présente avantageusement un rapport signal sur bruit élevé. Cela facilite le placement de fonctions gaussiennes au niveau des pics d'émission du spectre somme. Des pics d'émission proches en énergie, par exemple dans le domaine des basses énergies inférieures à 20 keV, peuvent ainsi être discernés et modélisés, tel qu'illustré sur la vignette de la figure 7B.

Les positions initiales (avant fit) de ces fonctions gaussiennes sont de préférence issues de positions de raies de référence provenant de bases de données, telles que la base de données NIST (National Institute of Standards and Technology). Cela permet d'identifier rapidement quels sont les éléments chimiques à l'origine des pics d'émission du spectre somme. Ces positions initiales peuvent être légèrement décalées en énergie par rapport aux positions des pics d'émission du spectre somme. Il est ainsi possible de déterminer, après fit, les écarts-types en position entre les pics d'émission du spectre somme et les raies de référence. Cela permet *in fine* de calibrer le spectre somme et/ou les spectres unitaires et/ou les spectres moyens.

Alternativement, les positions des fonctions gaussiennes peuvent être déterminées directement à partir du spectre somme, par une fonction dédiée standard. Les positions initiales des fonctions gaussiennes (avant fit) correspondent dès lors approximativement aux positions des pics d'émission du spectre somme.

Le modèle 50 peut éventuellement comprendre au moins une fonction affine destinée à modéliser le signal de fond 42, dans le cas où celui-ci n'a pas été préalablement filtré.

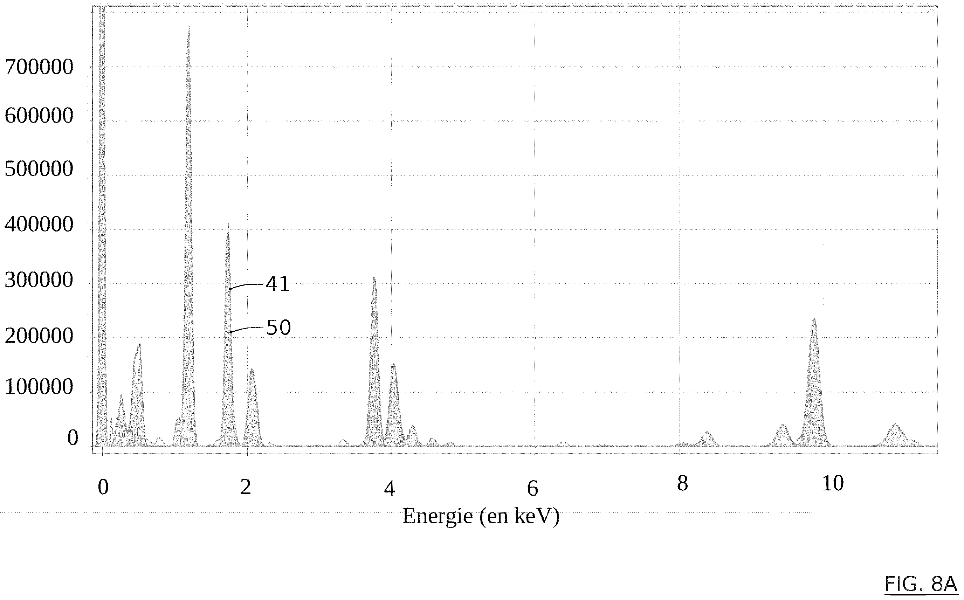

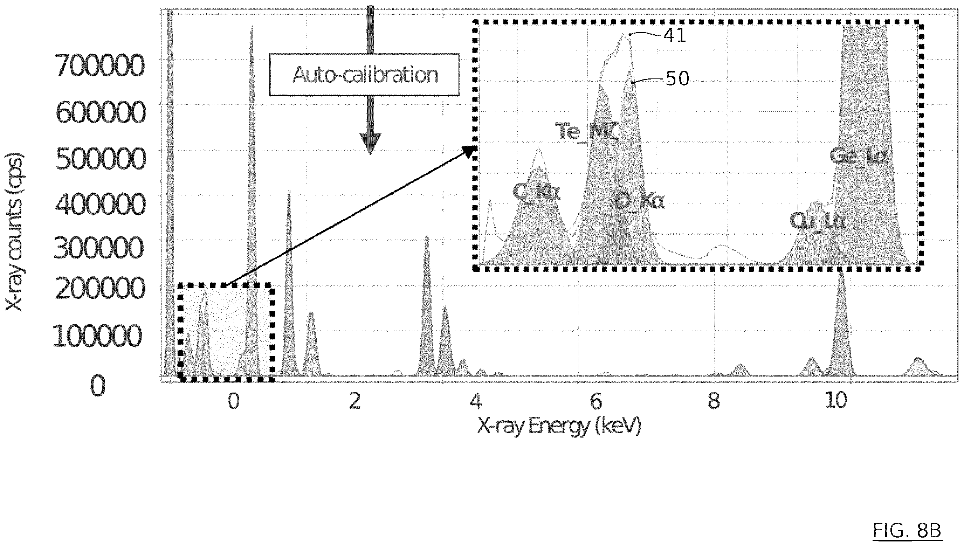

Tel qu'illustré aux figures 8A et 8B, le modèle 50 est ensuite ajusté (fit) au spectre somme 41, par exemple par une méthode classique de minimisation des moindres carrés. Les paramètres classiques d'ajustement des fonctions gaussiennes G(x) sont leur position E, leur amplitude A, leur largeur à mi-hauteur FWHM ou leur écart-type en énergie σ.

$$G(x) = \frac{A e^{-(x-E)^2}}{2 \times \sigma^2}$$

Cette opération peut être effectuée via une fonction de la librairie Scipy de Python.

Un ajustement peut être réalisé sur les écart-types σ liés à la largeur à mi-hauteur FWHM des gaussiennes. Ces deux paramètres vérifient la relation suivante :

$$\sigma = \frac{FWHM}{2 \times \sqrt{2 \times \ln 2}}$$

En particulier, cet ajustement peut être réalisé à partir d'une valeur initiale de $\sigma = \frac{FWHM_{Mn_{K\alpha}}}{2 \times \sqrt{2 \times \ln 2}}$ correspondant à l'écart type en énergie du pic d'émission de la raie Ka du Manganèse, qui est généralement utilisée pour évaluer la résolution maximale du détecteur EDX. La largeur des gaussiennes est typiquement liée à la réponse du détecteur, et l'écart type σ est constant pour toutes les gaussiennes. Dès lors, cet écart-type $\sigma = \frac{FWHM_{Mn_{K\alpha}}}{2 \times \sqrt{2 \times \ln 2}}$ peut être appliqué à l'ensemble des gaussiennes du modèle somme, avant ajustement.

D'autres valeurs initiales d'écart-type - ou de largeur à mi-hauteur correspondante - peuvent être utilisées. En particulier, des valeurs plus faibles peuvent permettre d'améliorer la séparation des pics d'émission proches en énergie, par exemple séparés par moins de 100 eV.

Ainsi, une valeur initiale de largeur à mi-hauteur de 20eV (soit 2 canaux d'énergie) peut être préférée à la valeur théorique de 125eV (soit 12.5 canaux, en pratique 12 ou 13 canaux d'énergie) pour la largeur à mi-hauteur de la raie Ka du Manganèse correspondant à la résolution des détecteurs EDX SDDs utilisés pour l'acquisition. Cela permet d'améliorer la séparation des pics proches en énergie lors de l'ajustement du modèle au spectre somme.

L'ajustement peut être réalisé de façon classique par minimisation des moindres carrées entre le spectre somme et le modèle de gaussiennes.

La figure 8B montre un résultat typique d'ajustement du modèle 50 sur le spectre somme 41, en particulier dans le domaine des basses énergies inférieures à 20 keV et pour des pics d'émission proches en énergie (vignette). La modélisation du spectre somme est ainsi particulièrement fiable et précise.

L'étape suivante consiste à transposer ce modèle 50 fiabilisé sur chacun des spectres unitaires et/ou moyens de la série d'images. Une soustraction du signal de fond pour chaque spectre unitaire peut être effectuée avec le même filtre « tophat » décrit plus haut, car les pics d'émission des spectres unitaires présentent sensiblement la même largeur à mi-hauteur que les pics d'émission du spectre somme.

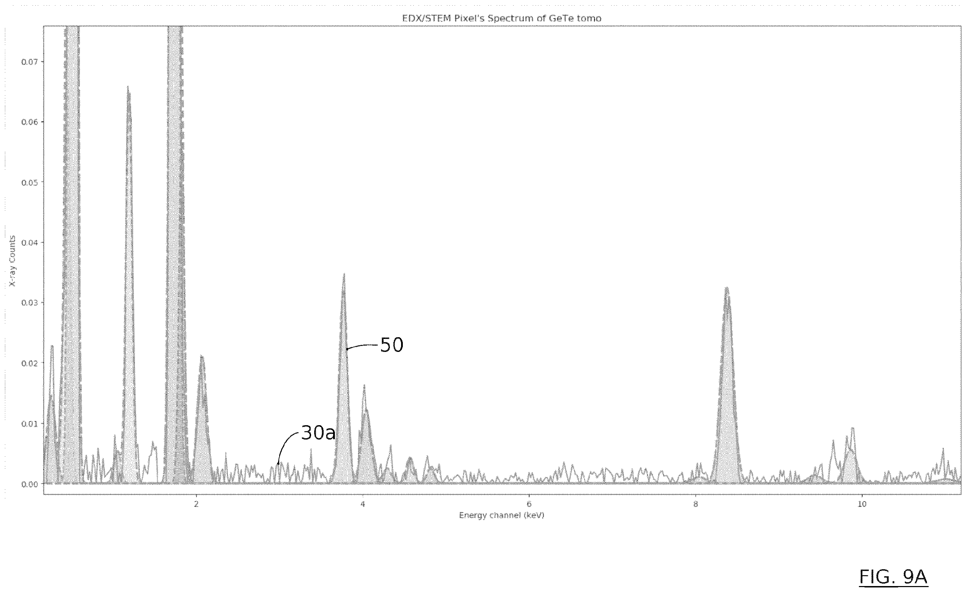

La figure 9A présente une superposition d'un spectre moyen 30a et du modèle 50 ajusté au spectre somme 41.

Le modèle 50 peut être ajusté (fit) au spectre moyen 30a de préférence par une méthode de minimisation des moindres carrés sous contraintes. Les positions et/ou les écarts-types en largeur à mi-hauteur déterminés précédemment sont conservés et fixés (contrainte sur le fit), de façon à éviter des fluctuations parasites de ces paramètres lors du fit. Cela permet d'éviter les erreurs de fit au niveau de pics proches en énergie et en partie superposés. Les paramètres d'ajustement des fonctions gaussiennes sur les spectres unitaires et/ou moyens sont donc de préférence uniquement leurs amplitudes.

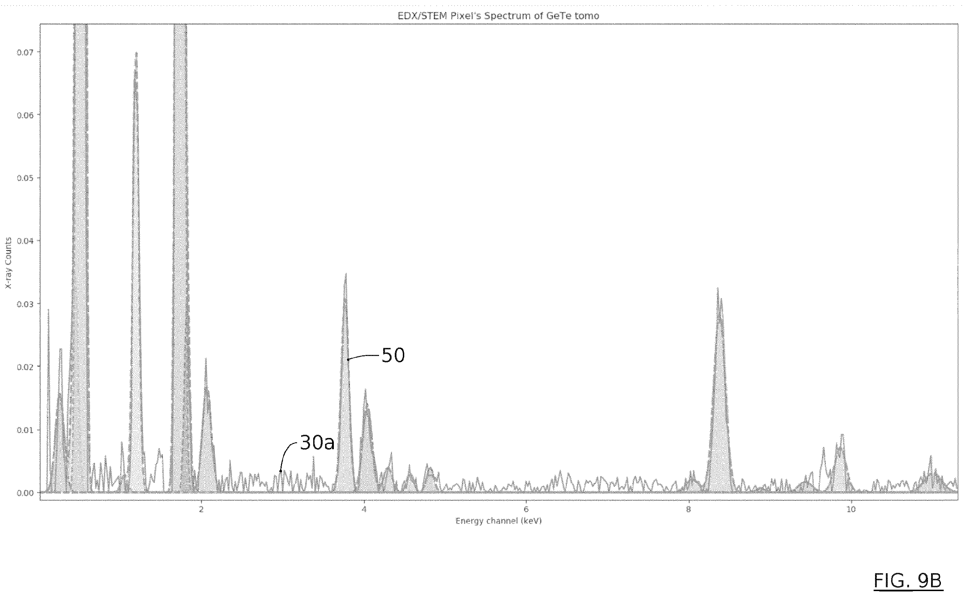

La figure 9B présente une superposition du spectre moyen 30a et du modèle 50 après ajustement des amplitudes des gaussiennes.

Le modèle 50 est ainsi ajusté, de préférence uniquement via le paramètre d'amplitude des gaussiennes, à chacun des spectres unitaires et/ou moyens de chaque image de la série d'images STEM-EDX.

Il est ensuite possible de construire des images paramétriques à partir des valeurs des paramètres des gaussiennes après fit. Par exemple, les gaussiennes correspondant à chaque groupe de raies d'émission K et L (somme des sous-raies $\alpha$, $\beta$ etc...) de chaque élément sur l'ensemble des pixels de chaque image, peuvent être intégrées. Les valeurs d'intégration reportées sur chaque pixel de chaque image permettent de construire des cartographies élémentaires. Dans le cas de série d'images tomographiques, cela permet d'obtenir une reconstruction 3D pour chaque élément chimique, par raie d'émission.

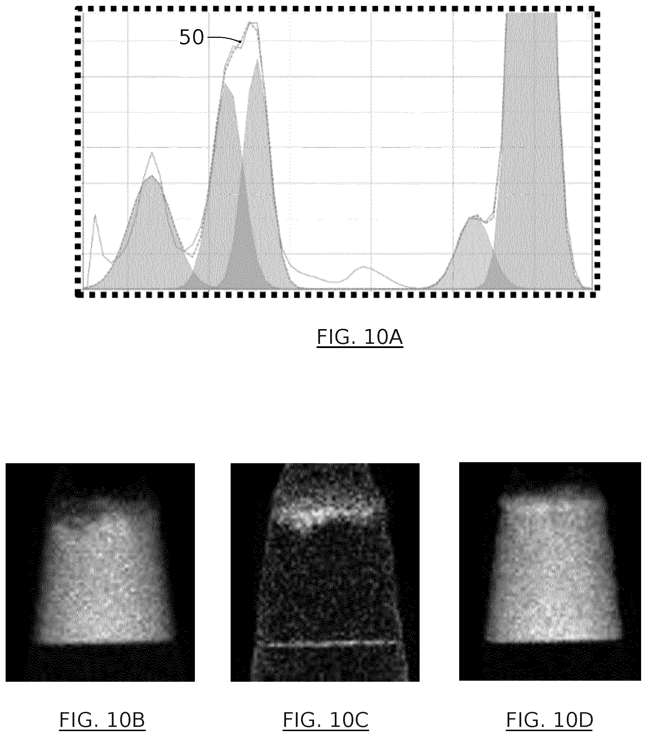

La figure 10A montre un résultat d'intégration des gaussiennes du modèle 50 après ajustement. L'intégrale de chaque gaussienne correspondant à la raie du Tellure Te_M$\zeta$ dans chaque pixel permet de construire la ou les cartographies élémentaires du Tellure de l'objet imagé, tel qu'illustré à la figure 10B. L'intégrale de chaque gaussienne correspondant à la raie de l'oxygène O_ K$\alpha$ dans chaque pixel permet de construire la ou les cartographies élémentaires de l'oxygène de l'objet imagé, tel qu'illustré à la figure 10C. L'intégrale de chaque gaussienne correspondant à la raie du Germanium Ge_ La dans chaque pixel permet de construire la ou les cartographies élémentaires du Germanium de l'objet imagé, tel qu'illustré à la figure 10D.

Le procédé selon l'invention est ici particulièrement avantageux pour séparer les pics d'émission issus des raies Ka de l'oxygène et M$\zeta$ du tellure, qui sont très proches en énergie et qui sont de façon connue une source d'erreurs de modélisation. La mise en œuvre de la PCA permettant d'identifier les données relatives aux pics d'émission et celles relatives au bruit, la formation d'un modèle sur le spectre somme et l'ajustement de ce modèle sous contrainte aux spectres unitaires permet d'obtenir de tels résultats de façon particulièrement fiable.

Dans l'exemple illustré ici, le procédé de traitement selon l'invention confirme l'existence de cristallites de tellure à l'interface oxyde/GeTe.

L'invention n'est pas limitée aux modes de réalisations précédemment décrits et s'étend à tous les modes de réalisation couverts par les revendications.

En particulier, la PCA permet avantageusement de débruiter les spectres unitaires de façon à pouvoir les modéliser. Elle permet d'obtenir des pics d'émission de forme environ gaussienne à partir de pics d'émission s'apparentant à des Dirac. D'autres méthodes permettant de débruiter des spectres unitaires comprenant des pics d'émission s'apparentant à des Dirac existent. L'application d'un filtre gaussien par exemple peut également permettre d'obtenir des pics d'émission de forme environ gaussienne à partir de pics d'émission s'apparentant à des Dirac. Ces méthodes dites de débruitage peuvent remplacer ou compléter la PCA sans se départir du cadre de la présente invention.

## Revendications

1. Procédé (100), mis en œuvre par ordinateur, de traitement d'images (1) acquises par microscopie électronique à balayage en transmission (STEM) couplées à une analyse dispersive en énergie de photoélectrons X (EDX), comprenant les étapes suivantes :

   - Fournir (101) une série d'images STEM comprenant chacune un ensemble de pixels (10a, 10b), chaque pixel de chaque ensemble de pixels comprenant des données sous forme d'au moins un spectre EDX unitaire (20a, 20b),
   - Réaliser une analyse (104) en composantes principales sur l'ensemble des données des spectres unitaires pour séparer des données significatives et des données non significatives, et pour reformer les spectres unitaires à partir des données significatives uniquement,
   - Former (108) un spectre somme (40, 41) par sommation des spectres unitaires, de façon à déterminer des pics d'émission contenus dans les spectres unitaires,
   - Modéliser (110) le spectre somme par ajustement des pics d'émission de ce spectre somme à partir de fonctions gaussiennes, de manière à déterminer (111) au moins les positions de ces pics d'émission,
   - Modéliser (113) chaque spectre unitaire à partir du modèle de spectre somme, en conservant au moins les positions déterminées précédemment et en ajustant au moins l'amplitude des fonctions gaussiennes aux pics d'émission des spectres unitaires.

2. Procédé selon la revendication précédente dans lequel seules les n premières composantes principales issues de l'analyse en composantes principales sont conservées pour reformer les spectres unitaires, avec $4 \leq n \leq 10$, typiquement n = 8.

3. Procédé selon l'une quelconque des revendications précédentes dans lequel la modélisation du spectre somme est effectuée à partir d'un modèle comprenant une distribution de fonctions gaussiennes, ce modèle étant ajusté au spectre somme par variation des paramètres respectifs d'amplitude, d'écart-type en énergie et de position en énergie.

4. Procédé selon la revendication précédente dans lequel, avant ajustement du modèle au spectre somme, l'écart type en énergie est initialement choisi en fonction d'une résolution limite des détecteurs EDX utilisés pour l'acquisition des spectres unitaires, et les positions en énergie sont initialement choisies en fonction de positions théoriques de raies d'émissions d'éléments chimiques.

5. Procédé selon l'une quelconque des deux revendications précédentes dans lequel chaque spectre unitaire est modélisé à partir du modèle de spectre somme issu de l'ajustement, en conservant l'écart type ajusté et les positions en énergie ajustées pour chacune des fonctions gaussiennes du modèle de spectre somme, et en ajustant uniquement l'amplitude de ces fonctions gaussiennes aux pics d'émission des spectres unitaires.

6. Procédé selon l'une quelconque des revendications précédentes dans lequel le nombre de spectres unitaires à modéliser est préalablement réduit par formation (103) de spectres moyens à partir de sous-ensembles de spectres unitaires de pixels spatialement et/ou temporellement adjacents de la série d'images, les spectres moyens ainsi formés remplaçant les spectres unitaires.

7. Procédé selon l'une quelconque des revendications précédentes comprenant en outre, après formation (108) du spectre somme, une étape de filtrage (109) d'un signal de fond (42) de ce spectre somme (40).

8. Procédé selon la revendication précédente dans lequel le filtrage du signal de fond est exécuté avant modélisation du spectre somme, par une opération morphologique dite « tophat » comprenant un arasement des pics d'émission du spectre somme configuré pour isoler le signal de fond, puis une soustraction de ce signal de fond isolé du spectre somme initial.

9. Procédé selon la revendication 7 dans lequel le filtrage du signal de fond du spectre somme est exécuté lors de la modélisation du spectre somme par fit d'une fonction affine.

10. Procédé selon l'une quelconque des revendications précédentes comprenant en outre, après modélisation (113) des spectres unitaires, une étape de formation (114) d'une série d'images paramétriques à partir d'au moins un paramètre issu des modèles de spectres unitaires.

11. Procédé selon l'une quelconque des revendications précédentes dans lequel la série d'images STEM EDX est acquise dans des conditions de tomographie.

12. Procédé selon les deux revendications précédentes en combinaison comprenant en outre, après formation de la série d'images paramétriques, une étape de reconstruction d'une image 3D paramétrique à partir de ladite série d'images paramétriques.

13. Procédé selon l'une quelconque des revendications précédentes comprenant en outre une étape de réduction du bruit des spectres unitaires, par exemple par décomposition en ondelettes.

14. Procédé selon l'une quelconque des revendications précédentes dans lequel le fit des pics d'émission du spectre somme lors de la modélisation du spectre somme est exécuté par une méthode de minimisation des moindres carrés sur les positions, les écarts-types en largeurs à mi-hauteur, et les amplitudes des fonctions gaussiennes.

15. Produit programme d'ordinateur comprenant des instructions, qui lorsqu'elles sont exécutées par au moins un processeur, effectue les étapes du procédé de traitement selon l'une quelconque des revendications précédentes.

**Patentansprüche**

1. Durch Computer implementiertes Verfahren (100) zur Verarbeitung von durch Rastertransmissionselektronenmikroskopie (STEM) erworbenen Bildern (1), gekoppelt mit einer energiedispersiven Analyse von Röntgenphotoelektronen (EDX), umfassend die folgenden Schritte:

   - Bereitstellen (101) einer Reihe von STEM-Bildern, von denen jedes eine Gruppe von Pixeln (10a, 10b) umfasst, wobei jedes Pixel von jeder Gruppe von Pixeln Daten in Form von mindestens einem einheitlichen EDX-Spektrum (20a, 20b) umfasst,

- Durchführen einer Hauptkomponentenanalyse (104) an der Gruppe der Daten der einheitlichen Spektren zum Trennen signifikanter Daten von nicht signifikanten Daten und zum Neubilden der einheitlichen Spektren ausschließlich ausgehend von signifikanten Daten,

- Bilden (108) eines Summenspektrums (40, 41) durch Summierung der einheitlichen Spektren derart, um in den einheitlichen Spektren enthaltene Emissionspeaks zu bestimmen,

- Modellieren (110) des Summenspektrums durch Anpassung der Emissionspeaks dieses Summenspektrums ausgehend von Gauss-Funktionen derart, um mindestens die Positionen dieser Emissionspeaks zu bestimmen (111),

- Modellieren (113) jedes einheitlichen Spektrums ausgehend von dem Summenspektrummodell unter Wahrung mindestens der vorher bestimmten Positionen und unter Anpassen mindestens der Amplitude der Gauss-Funktionen an den Emissionspeaks der einheitlichen Spektren.

2. Verfahren nach dem vorstehenden Anspruch, wobei einzig die n ersten Hauptkomponenten, die aus der Hauptkomponentenanalyse stammen, zum Neubilden der einheitlichen Spektren bewahrt werden, mit $4 \leq n \leq 10$, üblicherweise n = 8.

3. Verfahren nach einem der vorstehenden Ansprüche, wobei die Modellierung des Summenspektrums ausgehend von einem Modell vollzogen wird, umfassend eine Verteilung von Gauss-Funktionen, wobei dieses Modell durch Variation von jeweiligen Amplituden-, Energiestandardabweichungs- und Energiepositionsparametern an das Summenspektrum angepasst wird.

4. Verfahren nach dem vorstehenden Anspruch, wobei vor Anpassung des Modells an das Summenspektrum die Energiestandardabweichung anfänglich in Funktion einer limitierten Auflösung der zur Erwerbung der einheitlichen Spektren verwendeten EDX-Detektoren ausgewählt wird, und die Energiepositionen anfänglich in Funktion der theoretischen Positionen von Emissionslinien chemischer Elemente ausgewählt werden.

5. Verfahren nach einem der zwei vorstehenden Ansprüche, wobei jedes einheitliche Spektrum ausgehend von dem Summenspektrummodell, das aus der Anpassung stammt, unter Wahrung der angepassten Standardabweichung und der angepassten Energiepositionen für jede der Gauss-Funktionen des Summenspektrummodells und unter Anpassen ausschließlich der Amplitude dieser Gauss-Funktionen an die Emissionspeaks der einheitlichen Spektren modelliert wird.

6. Verfahren nach einem der vorstehenden Ansprüche, wobei die Anzahl von zu modellierenden einheitlichen Spektren vorab durch Bildung (103) von Durchschnittsspektren ausgehend von Untergruppen von einheitlichen Spektren von räumlich und/oder zeitlich benachbarten Pixeln der Reihe von Bildern reduziert wird, wobei die so gebildeten Durchschnittsspektren die einheitlichen Spektren ersetzen.

7. Verfahren nach einem der vorstehenden Ansprüche, umfassend des Weiteren nach Bildung (108) des Summenspektrums einen Filterungsschritt (109) eines Hintergrundsignals (42) dieses Summenspektrums (40).

8. Verfahren nach dem vorstehenden Anspruch, wobei die Filterung des Hintergrundsignals vor Modellierung des Summenspektrums durch einen morphologischen Vorgang, genannt "tophat", umfassend eine Glättung der Emissionspeaks des Summenspektrums, konfiguriert zum Isolieren des Hintergrundsignals, danach eine Subtraktion dieses isolierten Hintergrundsignals von dem anfänglichen Summenspektrum ausgeführt wird.

9. Verfahren nach Anspruch 7, wobei die Filterung des Hintergrundsignals des Summenspektrums bei der Modellierung des Summenspektrums durch Fitten einer affinen Funktion ausgeführt wird.

10. Verfahren nach einem der vorstehenden Ansprüche, umfassend des Weiteren nach Modellierung (113) der einheitlichen Spektren einen Bildungsschritt (114) einer Reihe von parametrischen Bildern ausgehend von mindestens einem Parameter, der aus Modellen von einheitlichen Spektren stammt.

11. Verfahren nach einem der vorstehenden Ansprüche, wobei die Reihe von STEM-EDX-Bildern unter Tomographiebedingungen erworben wird.

12. Verfahren nach einem der zwei vorstehenden Ansprüche in Kombination, umfassend des Weiteren nach Bildung der Reihe von parametrischen Bildern einen Rekonstruktionsschritt eines parametrischen 3D-Bildes ausgehend von der Reihe parametrischer Bilder.

13. Verfahren nach einem der vorstehenden Ansprüche, umfassend des Weiteren einen Reduktionsschritt des Rauschens der einheitlichen Spektren, zum Beispiel durch Zerlegung in kleine Wellen.

14. Verfahren nach einem der vorstehenden Ansprüche, wobei das Fitten der Emissionspeaks des Summenspektrums bei der Modellierung des Summenspektrums durch ein Verfahren der Minimierung der kleinsten Quadrate an den Positionen, den Standardabweichungen der Breiten auf halber Höhe und den Amplituden der Gauss-Funktionen ausgeführt wird.

15. Computerprogrammprodukt, umfassend Anweisungen, das, wenn durch mindestens einen Prozessor ausgeführt, die Schritte des Verarbeitungsverfahrens nach einem der vorstehenden Ansprüche vollzieht.

**Claims**

1. A method (100), implemented by a computer, for processing images (1) acquired by scanning transmission electron microscopy (STEM) coupled to an energy-dispersive analysis of X-ray photoelectrons (EDX), comprising the following steps:

   - Providing (101) a series of STEM images each comprising a set of pixels (10a, 10b), each pixel of each set of pixels comprising data in the form of at least one EDX unit spectrum (20a, 20b),
   - Performing a main component analysis (104) on all data of the unit spectra in order to separate significant data from non-significant data, and to reconstitute the unit spectra exclusively from significant data,
   - Forming (108) a summed spectrum (40, 41) by summing unit spectra so as to determine emission peaks contained in the unit spectra,
   - Modelling (110) the summed spectrum by fitting the emission peaks of the summed spectrum from Gaussian functions, so as to determine (111) at least the positions of the emission peaks,
   - Modelling (113) each unit spectrum from the summed spectrum model, by keeping at least the previously determined positions and by fitting at least the amplitude of the Gaussian functions to the emission peaks of the unit spectra.

2. The method according to the preceding claim wherein only the first n components coming from the main component analysis are kept for reconstituting the unit spectra, with $4 \leq n \leq 10$, typically n = 8.

3. The method according to any of the preceding claims wherein the modelling of the summed spectrum is performed from a model comprising a distribution of Gaussian functions, wherein the model is fitted to the summed spectrum by varying the corresponding parameters of amplitude, standard deviation of the energy and energy position.

4. The method according to the preceding claim wherein, before fitting the model to the summed spectrum, the standard deviation of the energy is initially chosen based on a resolution limit of the EDX detectors used for the acquisition of unit spectra, and the energy positions are initially chosen based on theoretical positions of spectral line of chemical elements.

5. The method according to any of the two preceding claims wherein each unit spectrum is modelled from the summed spectrum model coming from the fitting, keeping the fitted standard deviation and the fitted energy positions for each of the Gaussian functions of the summed spectrum model, and by only fitting the amplitude of the Gaussian functions to the emission peaks of the unit spectra.

6. The method according to any of the preceding claims wherein the number of unit spectra to model is reduced beforehand by forming (103) average spectra from subsets of the unit spectra of spatially and/or temporarily separated adjacent pixels of the series of images, where the average spectra which are formed in this manner replace the unit spectra.

7. The method according to any of the preceding claims comprising in addition, after the formation (108) of a summed spectrum, a step of filtering (109) a background signal (42) of said summed spectrum (40).

8. The method according to the preceding claim wherein the filtering of the background signal is performed before modelling the summed spectrum, by a so-called "top hat" morphological operation comprising clipping the emission peaks of the summed spectrum, which is configured to isolate the background signal, followed by a subtraction of said background signal which is isolated from the initial summed spectrum.

9. The method according to claim 7 wherein the filtering of the background signal of the summed spectrum is run during the modelling of the summed spectrum using a fitting an affine function.

10. The method according to any of the preceding claims further comprising, after the modelling (113) of unit spectra, a step of forming (114) a series of parametric images starting from at least one parameter coming from unit spectrum models.

11. The method according to any of the preceding claims, wherein the series of STEM EDX images is acquired under tomographic conditions.

12. The method according to the preceding two claims combined further comprising, following the formation of parametric images, the step of reconstructing a 3D parametric image from said series of parametric images.

**13.** The method according to any of the preceding claims further comprising a step of reducing the noise of the unit spectra, e.g. by decomposing into wavelets.

**14.** The method according to any of the preceding claims, wherein the fitting of the summed spectrum emission peaks during the modelling of the summed spectrum, is performed by a least square minimisation method on the positions, the standard deviations of full widths at half maximum, and the amplitudes of the Gaussian functions.

**15.** A computer program product comprising instructions which, when executed by at least one processor, performs the steps of the processing method according to any of the preceding claims.

| Image STEM EDX | 101 |

$\downarrow$

| Spectres unitaires | 102 |

$\downarrow$

| Spectres moyens (binning) | 103 |

$\downarrow$

| Analyse en composantes principales | 104 |

$\downarrow$

| Sélection des données sur n composantes principales, avec $n \leq 10$ | 105 |

$\downarrow$

| Spectres moyens débruités | 106 |

$\downarrow$

| Formation du spectre somme à partir des pics d'émission et/ou des spectres moyens débruités | 107 |

$\downarrow$

| Filtrage du signal de fond du spectre somme | 108 |

$\downarrow$

| Modélisation du spectre somme | 109 |

$\downarrow$

| Détermination des positions des pics d'émission du spectre somme | 110 |

$\downarrow$

| Détermination des écarts-types en largeur à mi-hauteur des pics d'émission du spectre somme | 111 |

$\downarrow$

| Modélisation des spectres unitaires à partir des positions et/ou des écarts-types déterminés sur le modèle du spectre somme | 112 |

$\downarrow$

| Extraction de paramètres des spectres unitaires et formation d'images paramétriques | 113 |

FIG. 1

FIG. 2A

EDX Signal

FIG. 2B

EP 3 786 626 B1

GeTe with TaN capping
PCA Scree Plot

FIG. 3

EDX model from decomposition with 8 components Signal

(79, 56)

(15, 79)

30a

30b

FIG. 4

FIG. 5

FIG. 6A

EP 3 786 626 B1

FIG. 6B

FIG. 7A

FIG. 7B

FIG. 8A

FIG. 8B

FIG. 9A

FIG. 9B

FIG. 10A

FIG. 10B

FIG. 10C

FIG. 10D

# EP 3 786 626 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Littérature non-brevet citée dans la description

- **LEPINAY et al.** Chemical 3D Tomography of 28nm High K Metal Gâte Transistor. *Micron,* 2013, vol. 47, 43-49
- **SLATER ; LEWIS ; HAIGH.** Energy Dispersive X-Ray Tomography for 3D Elemental Mapping of Individual Nanoparticles. *Journal of Visualized Experiments,* 2016, (113
- **ZHONG et al.** A bimodal tomographic reconstruction technique combining EDS-STEM and HAADF-STEM. *Ultramicroscopy,* 2017, vol. 174, 35-45
- **BURDET et al.** A novel 3D Absorption correction method for quantitative EDX-STEM tomography. *Ultramicroscopy,* 2016, vol. 160, 118-129
- **ROSSOUW et al.** Blind Source Séparation Aided Characterization of the Γ' Strengthening Phase in an Advanced Nickel-Based Superalloy by Spectroscopic 4D Electron Microscopy. *Acta Materialia,* 2016, vol. 107, 229-238
- **PARISH ; BREWER.** Multivariate Statistics Applications in Phase Analysis of STEM-EDS Spectrum Images. *Ultramicroscopy,* 2010, vol. 110 (2), 134-143
- **LUCAS et al.** Multivariate Statistical Analysis as a Tool for the Segmentation of 3D Spectral Data. *Micron,* 2013, vol. 52 (53), 49-56
- **POTAPOV ; LONGO ; OKUNISHI.** Enhancement of Noisy EDX HRSTEM Spectrum-Images by Combination of Filtering and PCA. *Micron,* 2017, vol. 96, 29-37
- **POTAPOV.** Why Principal Component Analysis of STEM Spectrum-Images Results in 'abstract', Uninterpretable Loadings?. *Ultramicroscopy,* 2016, vol. 160, 197-212
- **POTAPOV.** On the Loss of Information in PCA of Spectrum-Images. *Ultramicroscopy,* 2017, vol. 182, 191-194
- **SPIEGELBERG ; RUSZ.** Can We Use PCA to Detect Small Signais in Noisy Data?. *Ultramicroscopy,* 2017, vol. 172, 40-46
- **PEÑA et al.** *Hyperspy/Hyperspy V1.4.1.*
- **PAVEL POTAPOV et al.** Optimal principal component analysis of STEM XEDS spectrum images. *Advanced Structural and Chemical Imaging,* 09 Avril 2019, vol. 5 (1
- **DAVID B. WILLIAMS ; C. BARRY CARTER.** Transmission Electron Microscopy : A Textbook for Materials Science. Springer, 2009

31